# EUROPÄISCHE PATENTSCHRIFT

(11) **EP 0 820 373 B1**
(45) Veröffentlichungstag und Bekanntmachung des Hinweises auf die Patenterteilung: **21.07.1999**
(21) Anmeldenummer: 96907265.1
(22) Anmeldetag: 23.03.1996
(51) Int. Cl.: B29C 45/14, H01F 41/12

(54) **ANORDNUNG AUS MINDESTENS ZWEI MITEINANDER ZU VERBINDENDEN TEILEN**
ASSEMBLY OF AT LEAST TWO COMPONENTS TO BE SECURED TOGETHER
ENSEMBLE CONSTITUE D'AU MOINS DEUX PIECES DEVANT ETRE RELIEES ENTRE ELLES

(30) Priorität: 08.04.1995 DE 19513465
(43) Veröffentlichungstag der Anmeldung: 28.01.1998
(73) Patentinhaber: ROBERT BOSCH GMBH, 70442 Stuttgart (DE)
(72) Erfinder: JUST, Bernhard, D-71394 Kernen (DE); BAUMANN, Rudolf, D-71701 Schwieberdingen (DE); BOFINGER, Manfred, D-71636 Ludwigsburg (DE); ULLMANN, Thomas, D-71522 Backnang (DE); KULL, Bernhard, D-73630 Remshalden (DE); STAHL, Ulrich, D-71701 Schwieberdingen (DE); BALD, Rolf, D-74206 Bad Wimpfen (DE); HERDERICH, Hans-Jürgen, D-71394 Kernen (DE); BISCHOF, Rolf, D-99891 Fischbach (DE)
(86) Internationale Anmeldenummer: DE9600509
(87) Internationale Veröffentlichungsnummer: WO9632241

(56) Entgegenhaltungen:
- US-A- 3 268 645
- US-A- 3 451 021
- US-A- 3 662 460
- US-A- 5 153 052

## Beschreibung

Die Erfindung betrifft einen Anordnung aus mindestens zwei miteinander zu verbindenden Teilen nach dem Oberbegriff des Patentanspruchs 1.

Eine derartige Anordnung ist beispielsweise aus des DE-C-3642246 zu entnehmen.

Auch ist bereits aus der US-A-2,956,312 ein Spulenkörper und ein Gehäuse als miteinander zu verbindende Teile einer induktiven Anordnung bekannt, bei der die Teile aus thermoplastischem Material aufgebaut sind. Der zylindrische Spulenkörper weist in einem Bereich auf dem äußeren Zylindermantel keilförmige Ringnuten auf; die Spule selbst ist zwischen einem Teil des Spulenkörpers, der als Spulenschild dient und einer auf dem Zylinder gehaltenen Scheibe eingespannt. Das thermoplastische Material sowohl des Spulenkörpers als auch des Gehäuses können hierbei während der Montage bei hohen Temperaturen miteinander in Teilbereichen verschmelzen, so daß sich ein dichter Zusammenhalt dieser Teile ergibt. Die Ringnuten auf dem Spulenkörper sowie eine zusätzliche Ringnut auf dem Spulenschild bewirken durch ihre Verzahnungen mit dem Gehäusematerial einen festen Halt.

Weitere Anordnungen aus miteinander zu verbindenden Teilen aus thermoplastischem Material sind aus der US-A-3 268 645 und aus der US-A-3 451 021 bekannt,
ferner beschreibt die US-A-5 153 052 eine Anordnung aus zu verbindenden thermoplastischen Teilen mit unterschiedlichen Schmelzpunkten.

Bei mechanisch und thermisch besonders beanspruchten Anordnungen, wie beispielsweise an Drehzahlsensoren an Kraftfahrzeugen, können an den Verbindungsstellen durch Rißbildungen Spalte entstehen, durch die beispielsweise Feuchtigkeit eindringen kann. Auch kann beim Aushärten des thermoplastischen Materials durch Nachschwinden ein Spalt zwischen dem Spulenkörper und dem Gehäuse entstehen, der die Funktionsfähigkeit der Anordnung negativ beeinflußt.

Aufgabe der Erfindung ist es, eine Anordnung aus miteinander zu verbindenden Teilen aus thermoplastischem Material vorzuschlagen, die eine sichere Abdichtung gegenüber Feuchtigkeit gewährleistet.

Nach der Erfindung wird diese Aufgabe durch eine Anordnung gemäß dem Patentanspruch 1 gelöst.

### Vorteile der Erfindung

Die erfindungsgemäße Anordnung der eingangs genannten Art ist mit den Merkmalen des Kennzeichens des Anspruchs 1 insofern vorteilhaft, als daß durch die Auswahl der Materialien und der Gestaltung der Geometrie eines Fortsatzes am ersten Teil ein optimaler Zusammenhalt der beiden Teile der Anordnung gewährleistet ist.

Mit den im Unteransprüch 2 angeführten Merkmalen wird die erfindungsgemäße Anordnung vorteilhaft weitergebildet. Die vollständige Ummantelung des ersten Teils mit dem Fortsatz, welche beispielsweise axial außen um den Fortsatz herumgezogen ist und dabei in die Nuten eingreift, stellt auf einfache Art und Weise sicher, daß nahezu alle Kräfte, die zu einer Rißbildung im Betrieb der Anordnung führen können aufgefangen werden können. Insbesondere die scharfkantige, schwalbenschwanzförmige Umrandung am äußeren Umfang des Fortsatzes führt zu einer stabilen Halterung der Ummantelung am ersten Teil der Anordnung.

Gemäß eines Ausführungsbeispiels einer Anordnung als Sensor wird eine dichte Verbindung zwischen einem Spulenkörper mit einem Spulenschild als Fortsatz und der Ummantelung als Gehäuse erreicht; hierzu bestehen diese Teile aus thermoplastischem Material, wobei das äußere Material einen höheren Schmelzpunkt aufweist. Dadurch wird bei einer Umspritzung des Spulenschildes insbesondere im Bereich der Nuten Material aufgeschmolzen, so daß sich eine dichte Verbindung zwischen dem Spulenschild und der Ummantelung bildet. Für die dichte Verbindung ist ferner auch die Ausbildung der Nuten, insbesondere am Umfang des Spulenschildes von Bedeutung. Diese Ringnut weist hier eine etwa parallel zur Stirnseite verlaufende Rückwand auf. Unter einem spitzem Winkel hierzu ist die Vorderseite dieser Ringnut ausgebildet. Zusätzlich sind noch die Nuten an der äußeren Stirnseite des Spulenschildes sägezahnförmig ausgebildet, so daß sich eine dichte Verbindung auch mit dem, den Spulenschild umgreifenden Bereich der Ummantelung ergibt.

### Zeichnung

Ein Ausführungsbeispiel der Erfindung wird anhand der Zeichnung erläutert. Es zeigen:
Figur 1 einen Schnitt durch eine Anordnung mit einem Spulenkörper an dem ein induktiver Drehzahlsensor angebracht werden kann;
Figur 2 einen Schnitt durch ein Detail der Anordnung nach Figur 1 mit einem Spulenschild und
Figur 3 einen Schnitt durch eine fertig ummantelte Anordnung des Ausführungsbeispiels nach Figur 1.

### Beschreibung des Ausführungsbeispiels

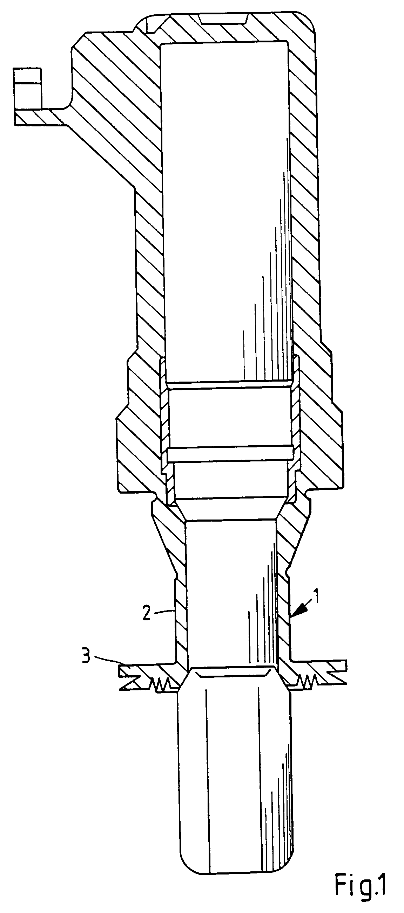

In Figur 1 ist Spulenkörper 1 als erstes Teil dargestellt, bei dem in einem späteren Fertigungsstadium eine Spule auf die Wickelfläche 2 aufgewickelt werden kann. Der Spulenkörper 1 weist an seinem einen Ende ein Spulenschild 3 als Fortsatz auf, das die Spule in ihrer Lage fixiert. Das Spulenschild 3 ist hierbei als flanschartiger Fortsatz des Spulenkörpers 1 ausgebildet, der etwa quer zur Achse des Spulenkörpers 1 verläuft und als Begrenzung für die Spule dient. Der Spulenkörper 1 ist aus einem thermoplastischen Material, vorzugsweise Polyamid (PA 6) mit einem Schmelzpunkt von ca. 220°C, hergestellt. Die Spule als Bestandteil eines induktiven Drehzahlsensors soll Drehbewegungen eines metallischen Teils, das während der Drehbewegung das Magnetfeld der Spule beeinflußt, detektieren.

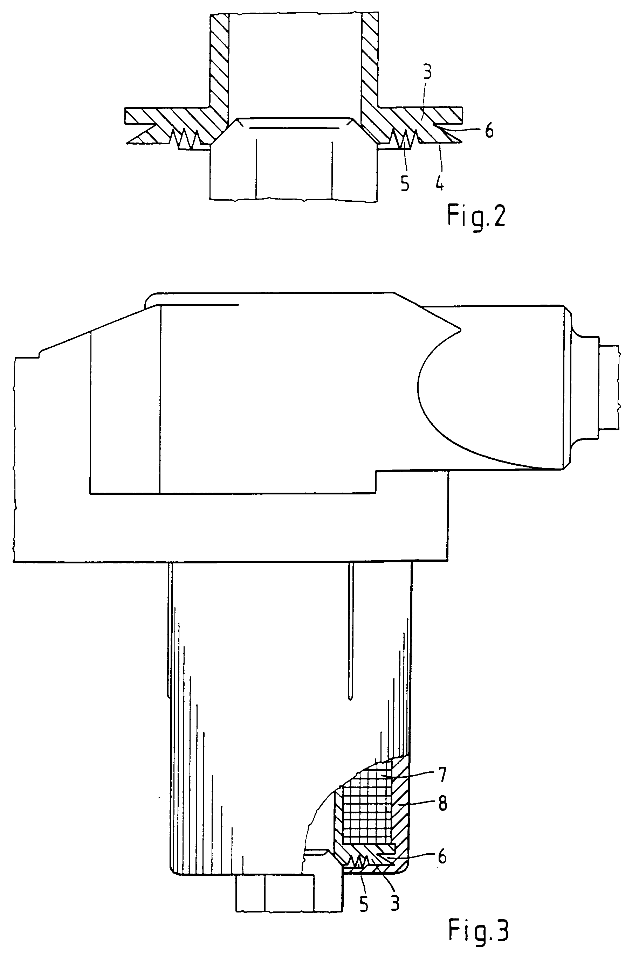

Figur 2 zeigt das Spulenschild 3 im Detail, so daß insbesondere auf der Stirnseite 4 angeordnete keilförmige Ringnuten 5 und eine am äußeren Umfang angeordnete Ringnut 6 deutlich erkennbar sind. Die äußere Ringnut 6 ist so gestaltet, daß sich eine schwalbenschwanzförmige, umlaufende Kante mit einem spitzen Winkel von kleiner als 50° ergibt. Die auf der Stirnseite 4 angeordneten Ringnuten 5 ragen hierbei einen geringen Betrag über die Fläche der Stirnselte 4 hinaus.

Aus Figur 3 ist die bereits ummantelte Spulenanordnung für einen hier nicht näher erläuterten Drehzahlsensor mit einer Spule 7 und einer Ummantelung als Gehäuse 8 aus einem thermoplastischen Material, beispielsweise Polyamid (PA 66) mit einem Schmelzpunkt von ca. 255°C, erkennbar. Die Ummantelung 8 ist hierbei in einer Umspritztechnik vollständig um das Spulenschild 3 herumgezogen. Während der Umspritzung führt eine Verschmelzung im Bereich der Ringnuten 5 und insbesondere im Bereich der Nut 6 zu einer festen und dauerhaft dichten Verbindung der beiden Teile 3 und 8.

## Patentansprüche

1. Anordnung aus mindestens zwei miteinander zu verbindenden Teilen (3, 8), die aus thermoplastischem Material bestehen und das Material des ersten Teils (3) einen niedrigeren Schmelzpunkt hat als das Material des jeweils mit ihm zu verbindenden Teils (8), wobei das erste Teil (3) einen flanschartigen Fortsatz (3) aufweist und sowohl am Umfang des Fortsattes (3) als auch an der äußeren Stirnseite des Fortsatzes (3) mindestens eine umlaufende Nut (5, 6) vorhanden ist, in die das Material des anderen Teils (8) einbringbar ist, wobei die beiden Materialien in diesem Bereich miteinander verschmelzen und wobei das jeweils andere Teil (8) das erste Teil (3) umgreift, dadurch gekennzeichnet, daß die auf dem Umfang des Fortsatzes (3) liegende Nut (6) eine äußere, schwalbenschwanzförmige Kante mit einem spitzen Winkel von kleiner als 50° aufweist und daß auf der äußeren Stirnseite (4) mindestens zwei keilförmige Ringnuten liegen, die eine sägezahnförmige Geometrie aufweisen.

2. Anordnung nach Anspruch 1, dadurch gekennzeichnet, daß die Anordnung ein induktiver Sensor ist, wobei das erste Teil ein Spulenkörper (1) ist, mit dem als Fortsatz (3) ausgebildeten Spulenschild, und das andere Teil das Gehäuse (8) der Anordnung bildet.

## Claims

1. Arrangement comprising two or more parts (3, 8) to be connected to one another, the parts consisting of thermoplastic material and the material of the first part (3) having a lower melting point than the material of the part (8) to be connected to it in each case, the first part (3) having a flange-like projection (3) and one or more circumferential grooves (5, 6) being present on the circumference of the projection (3) and also on the outer end face of the projection (3), into which grooves the material of the other part (8) can be introduced, the two materials melting together in this region and the other part (8) engaging around the first part (3), characterized in that the groove (6) lying on the circumference of the projection (3) has an outer, dovetailed-shape edge with an acute angle of less than 50°, and in that two or more wedge-shaped annular grooves are provided on the outer end face (4) and have a saw-tooth geometry.

2. Arrangement according to Claim 1, characterized in that the arrangement is an inductive sensor, the first part being a coil body (1), with the coil shield designed as a projection (3), and the other part forms the housing (8) of the arrangement.

## Revendications

1. Ensemble constitué d'au moins deux pièces (3, 8) à relier ensemble, constituées en un matériau thermoplastique, et le matériau de la première pièce (3) présentant un point de fusion inférieur à celui du matériau chaque fois de la pièce (8) à relier avec elle, la première pièce (3) présentant un prolongement (3) du genre d'une bride, et tant sur la périphérie du prolongement (3), qu'également sur la face frontale extérieure du prolongement (3) étant prévue au moins une gorge (5, 6) faisant le pourtour, dans laquelle le matériau de l'autre partie (8) peut être introduit, les deux matériaux fondant ensemble dans cette zone et chaque fois l'autre pièce (8) entourant la première pièce (3),
caractérisé en ce que
la gorge (6) placée sur la périphérie du prolongement (3) présente une arête extérieure en forme de queue d'aronde, avec un angle aigu inférieur à 50°, et en ce que sur la face frontale extérieure (4) sont prévues au moins deux gorges annulaires cunéiformes, présentant une géométrie en forme de dents de scie.

2. Ensemble selon la revendication 1,
caractérisé en ce que
l'ensemble est un capteur inductif, la première pièce étant un corps de bobine (1), avec un bouclier de bobine réalisé sous la forme de prolongement (3), et l'autre pièce formant le boîtier (8) de l'ensemble.
